# FASCICULE DE BREVET EUROPEEN

(11) **EP 1 345 710 B1**
(45) Date de publication et mention de la délivrance du brevet: **22.09.2004**
(21) Numéro de dépôt: 00990840.1
(22) Date de dépôt: 28.12.2000
(51) Int. Cl.: B21C 37/29, B23Q 39/04, B23P 23/04

(54) **DISPOSITIF ET PROCEDE DE REALISATION DE RACCORDEMENTS TRAVERSANT SUR DES DISPOSITIFS D'ECHAPPEMENTS**
VORRICHTUNG UND VERFAHREN ZUR HERSTELLUNG VON ANSCHLUSSSTUTZEN IN EINER ABGASANLAGE
DEVICE AND METHOD FOR MAKING CONNECTIONS THAT CROSS OVER EXHAUST DEVICES

(43) Date de publication de la demande: 24.09.2003
(73) Titulaire: WIMETAL S.A., Société Anonyme, F-67160 Wissembourg (FR)
(72) Inventeur: IONESCU, Georges, F-67500 Haguenau (FR); KIEFFER, Yannick, F-67400 Illkirch (FR); ONESANU, Andrei, F-67160 Altenstadt (FR)
(74) Mandataire: Nuss, Pierre
(86) Numéro de dépôt international: PCT/FR2000/003730
(87) Numéro de publication internationale: WO 2002/053305

(56) Documents cités:
- EP-A- 0 736 359
- WO-A-98/45584
- FR-A- 2 003 389
- US-A- 1 906 953
- US-A- 4 655 652

## Description

La présente invention concerne le domaine de la fabrication d'éléments tubulaires, en particulier dans l'industrie des équipements automobiles, plus particulièrement la réalisation de raccordements traversants sur des dispositifs d'échappements, notamment des tuyaux raccordés à des boîtes catalytiques, des boîtes catalytiques acoustiques ou des silencieux, et a pour objet un dispositif de réalisation de tels raccordements par fluoperçage et fluotaraudage. Connu p.e. du document WO-A-98/45584 est une réalisation de raccordements traversants sur des dispositifs d'échappement à l'aide de plusieurs dispositifs indépendants de centrage, de fluoperçage et de fluotaraudage.

L'invention a également pour objet un procédé mettant en oeuvre ce dispositif.

Les lignes d'échappement comportant des boîtes catalytiques mettent en oeuvre des éléments de mesure et de contrôle qui sont généralement fixés sur les tuyaux de raccordement correspondants de manière traversante, afin de pouvoir procéder au relevé des caractéristiques des gaz d'échappement, en vue d'une prise en compte de ces dernières pour un réglage en continu des paramètres de combustion du moteur raccordé à ladite ligne d'échappement.

A cet effet, il est nécessaire de réaliser, sur les tuyaux correspondants, des paliers constitués par des perçages et des moyens de fixation de ces éléments de mesure et de contrôle.

Actuellement, ces paliers sont réalisés en une suite d'opérations consistant en un aplatissement préalable d'une portion de circonférence des tuyaux, puis en un perçage suivi d'un soudage d'un écrou ou d'une plaque métallique préalablement taraudée. Ces opérations sont suivies d'un contrôle d'étanchéité.

Un tel mode de réalisation permet l'obtention de bons résultats quant à la qualité des paliers obtenus. Cependant, le procédé mis en oeuvre, du fait qu'il nécessite différentes opérations d'usinage indépendantes et des apports de matière, est relativement lent et coûteux, de sorte que le prix de revient des éléments d'échappements ainsi obtenus est considérablement augmenté.

La présente invention a pour but de pallier ces inconvénients en proposant un dispositif et un procédé de réalisation de raccordements traversants sur des dispositifs d'échappements, notamment des tuyaux raccordés à des boîtes catalytiques, des boîtes catalytiques acoustiques ou des silencieux, par fluoperçage et fluotaraudage, permettant de réduire sensiblement les coûts de production, tout en augmentant les cadences de production.

A cet effet, le dispositif de réalisation de raccordements traversants sur des dispositifs d'échappements, notamment des tuyaux raccordés à des boîtes catalytiques, des boîtes catalytiques acoustiques ou des silencieux, est caractérisé en ce qu'il est essentiellement constitué par un tambour de montage de pièces à usiner, par au moins un ensemble mobile d'unités de centrage, de fluoperçage et de fluotaraudage desdites pièces à usiner, ledit ensemble mobile étant déplaçable parallèlement à l'axe longitudinal du tambour et par un bâti de support et de guidage du tambour de montage et d'au moins un ensemble mobile.

L'invention a également pour objet un procédé de réalisation de raccordements traversants sur des dispositifs d'échappements, notamment des tuyaux raccordés à des boîtes catalytiques, des boîtes catalytiques acoustiques ou des silencieux, mis en oeuvre au moyen de ce dispositif et caractérisé en ce qu'il consiste essentiellement à monter des pièces à usiner successivement sur un tambour de montage, à réaliser sur lesdites pièces des opérations successives de centrage, de fluoperçage et de fluotaraudage, puis à démonter et à évacuer les pièces usinées.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en en élévation frontale et en coupe du dispositif conforme à l'invention ;
la figure 2 est une vue en élévation latérale et en coupe du dispositif, et
les figures 3a à 3d sont des vues schématiques en coupe représentant les différentes phases du centrage et du fluoperçage.

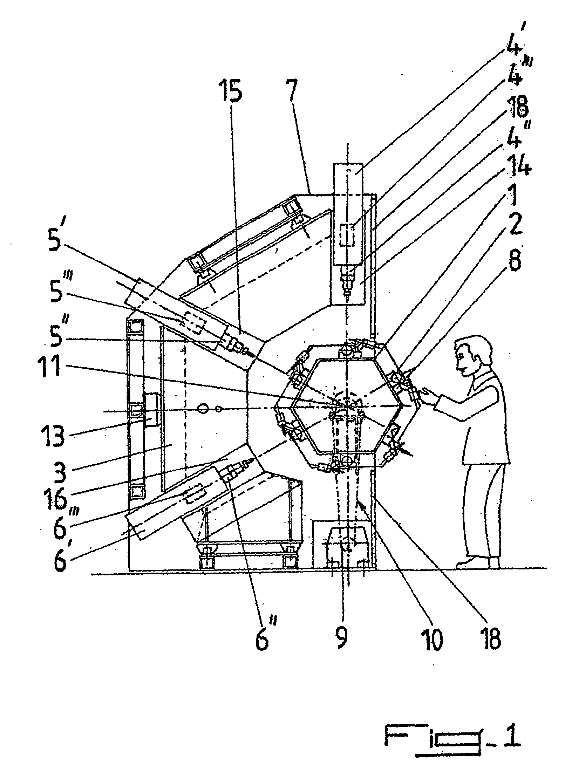

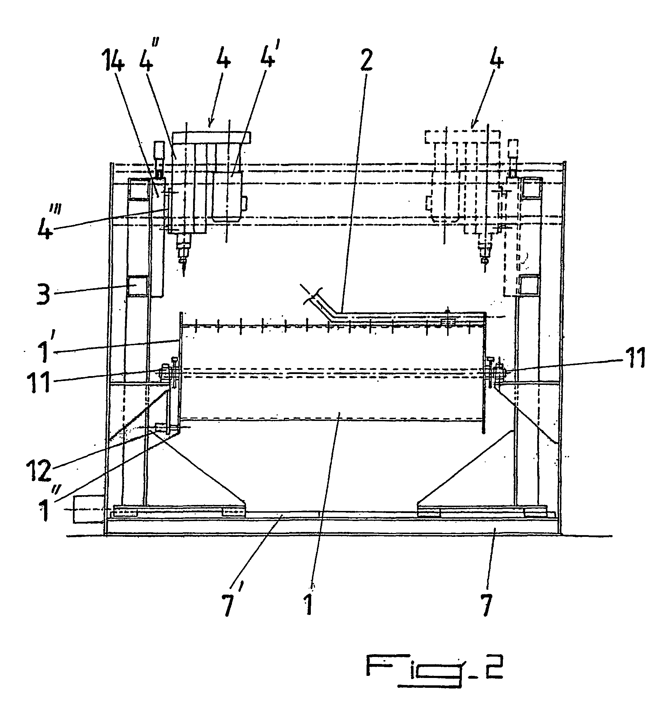

Conformément à l'invention, et comme le montrent plus particulièrement, à titre d'exemple, les figures 1 et 2 des dessins annexés, le dispositif de réalisation de raccordements traversants sur des dispositifs d'échappements, notamment des tuyaux raccordés à des boîtes catalytiques, des boîtes catalytiques acoustiques ou des silencieux, est essentiellement constitué par un tambour 1 de montage de pièces 2 à usiner, par au moins un ensemble mobile 3 d'unités de centrage 4, de fluoperçage 5 et de fluotaraudage 6 desdites pièces 2 à usiner et par un bâti 7 de support et de guidage du tambour de montage 1 et d'au moins un ensemble mobile 3. L'invention sera décrite en prenant en considération une machine comportant un seul ensemble mobile 3. Cependant, comme représenté en pointillé à la figure 1 des dessins annexés, cette machine pourrait être équipée de plus d'un ensemble mobile, à savoir d'au moins deux ensembles mobiles 3.

Le tambour 1 de montage des pièces 2 à usiner est avantageusement réalisé sous forme d'un élément mécano-soudé de section polygonale, pourvu sur chaque face de moyens 8 de positionnement et de blocage des pièces 2 à usiner et entraîné en rotation par l'intermédiaire d'un ensemble motoréducteur indexable 9 et d'une transmission à roues et chaîne 10.

Ce tambour 1 est monté par ses extrémités sur des paliers 11 prévus sur le bâti 7 de support et de guidage du tambour de montage 1 et d'au moins un ensemble mobile 3 et est pourvu, en regard de chaque surface plane le délimitant, sur un flasque 1' d'extrémité d'un perçage 1" destiné à coopérer avec un doigt d'indexation 12 prévu sur le bâti 7. Le doigt d'indexation 12 peut consister en la tige d'un piston pneumatique ou hydraulique commandé automatiquement au déverrouillage par chaque impulsion de commande de rotation du tambour 1, le verrouillage s'effectuant également automatiquement à l'arrêt de la rotation du tambour 1. De préférence, l'extrémité de ce doigt d'indexation sera conique ou tronconique, afin de permettre la récupération de tout jeu de fonctionnement pouvant éventuellement survenir dans l'entraînement en rotation du tambour 1.

Ainsi, il est possible d'assurer un positionnement parfait du tambour 1 et en particulier de ses surfaces de réception des pièces à usiner 2, d'une part, du fait d'un actionnement pas-à-pas de l'ensemble moto-réducteur indexable 9 et, d'autre part, d'un blocage en position du tambour 1 par l'intermédiaire du doigt d'indexation 12.

A l'extrémité du tambour 1 opposée à celle comportant la transmission à roues et chaîne 10 coopérant avec l'ensemble moto-réducteur 9, le palier 11 du tambour 1 coopérant avec le bâti 7 de support et de guidage du tambour de montage 1 et d'au moins un ensemble mobile 3 est sous forme d'un joint tournant comportant les raccordements des circuits de commande des moyens 8 de positionnement et de blocage des pièces 2 à usiner. La prévision d'un joint tournant, dont la conception est parfaitement accessible à l'homme du métier, permet d'assurer, en continu, la commande des moyens 8 et leur maintien en position de blocage pendant la rotation du tambour 1. En outre, des moyens de commandes annexes peuvent parfaitement assurer la possibilité d'un actionnement séparé de l'un ou l'autre des moyens 8, tout en garantissant le maintien en position des autres moyens 8. Un tel effet peut notamment être obtenu par prévision au niveau de chaque moyen 8 d'un dispositif de verrouillage du circuit de commande en fonction de la position du moyen 8 et de la pièce 2 à usiner correspondante dans la machine. Ainsi, il peut être envisagé que les moyens 8 ne puissent être actionnés que dans des positions de chargement et de déchargement des pièces 2.

Ces moyens 8 de positionnement et de blocage des pièces 2 à usiner sont préférentiellement sous forme de brides et de gabarits à commande pneumatique ou hydraulique et ne sont pas décrits plus en détails. Les déplacements des mors ou analogue de ces brides ou gabarits sont avantageusement réalisés par l'intermédiaire de vérins commandés à partir d'un poste central de commande manuel ou automatique.

Chaque ensemble mobile 3 d'unités de centrage 4, de fluoperçage 5 et de fluotaraudage 6 des pièces 2 à usiner se présente sous la forme d'un chariot guidé parallèlement à l'axe longitudinal du tambour 1 sur des rails 7' du bâti 7 de support et de guidage et entraîné en déplacement longitudinal le long du tambour 1 par l'intermédiaire d'un entraînement linéaire 13 constitué sous forme d'un ensemble motoréducteur et d'une transmission de mouvement mécanique ou encore sous forme d'un vérin hydraulique ou pneumatique. Dans le cadre d'une réalisation d'un ensemble motoréducteur, il peut être envisagé de loger celui-ci dans le chariot et d'agir directement, au moyen d'un pignon monté sur l'arbre de sortie, sur une crémaillère longitudinale ou encore de loger l'ensemble motoréducteur dans le bâti 7 et d'agir sur le chariot formant l'ensemble 3 par l'intermédiaire d'une transmission à vis et écrous. Des détails d'une telle transmission de mouvements ne sont pas représentés sur les dessins annexés, la constitution de telles transmissions étant parfaitement accessible à l'homme du métier et ne nécessitant pas de description complémentaire.

Les unités de centrage 4, de fluoperçage 5 et de fluotaraudage 6 des pièces 2 à usiner sont montées sur le chariot formant l'ensemble mobille 3 avec des décalages angulaires correspondant au décalage angulaire entre les plans radiaux passant au milieu des faces du polygone formant le tambour 1 et par l'axe longitudinal de ce dernier. De préférence, le tambour 1 présente une section hexagonale et les unités 4 à 6 sont disposées respectivement dans le plan radial vertical passant par l'axe longitudinal du tambour 1 et au-dessus dudit tambour 1, à 60° par rapport à ce plan vertical et à 120° par rapport à ce plan vertical, tous ces plans contenant les unités 4 à 6 étant radiaux et sécants sur l'axe longitudinal du tambour 1.

Les unités de centrage 4, de fluoperçage 5 et de fluotaraudage 6 des pièces 2 à usiner sont constituées chacune sous forme d'un groupe motorisé comportant chacun un moteur d'entraînement 4', 5', 6' d'un dispositif porte-outils 4", 5", 6" et monté sur un chariot de déplacement 4''', 5''', 6''' suivant l'axe longitudinal de l'outil, dans un plan passant perpendiculairement par une face correspondante du tambour 1 et par l'axe longitudinal dudit tambour 1 (figures 1 et 2).

Les chariots de déplacement 4"', 5"', 6"' sont guidés chacun dans une unité correspondante 14, 15 ou 16 (figures 1 et 2) comportant un moyen de déplacement longitudinal 14', 15', 16', dans un plan correspondant à celui passant par la pièce 2 à usiner correspondante et l'axe longitudinal du tambour 1, ce moyen de déplacement longitudinal 14', 15', 16' étant constitué soit par un vérin, soit par un ensemble motoréducteur. De préférence, les chariots de déplacements 4"', 5"', 6''' coopèrent avec des moyens d'indexation longitudinaux, non représentés, consistant en des butées de fin de course ou des détecteurs ou analogues, destinés à commander la fin du déplacement desdits chariots 4"', 5''', 6''' et des dispositifs porte-outils 4", 5", 6".

Il est ainsi possible de réaliser un déplacement parfaitement contrôlé de chaque dispositif porte-outils et donc de réaliser chaque opération correspondante de manière particulièrement précise.

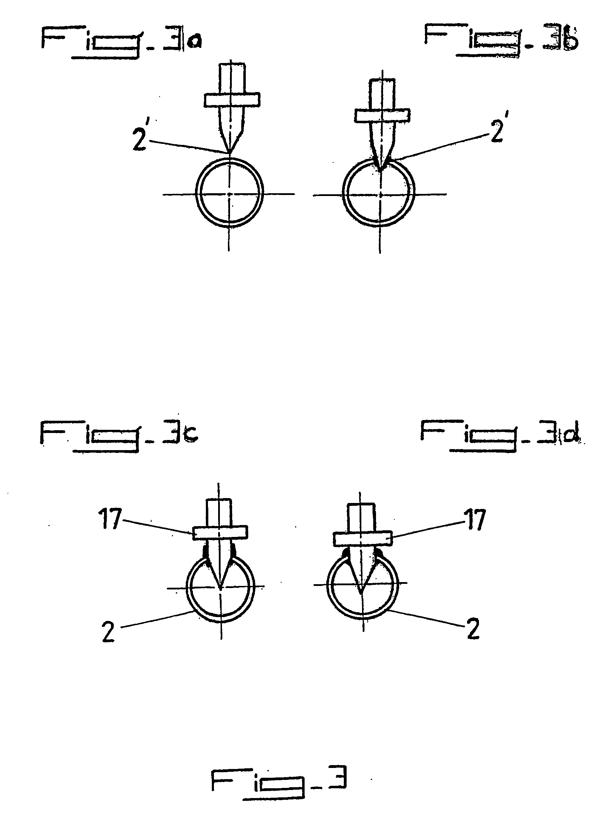

L'unité de centrage 4 consiste en une unité de perçage standard pourvue d'un foret de centrage et réalise, à chaque emplacement prévu sur la pièce 2 à usiner un perçage d'entâme 2' (figures 3a, 3b). Le principe de fonctionnement de cette unité de centrage est de type connu.

L'unité de fluoperçage 5 réalise, comme le montrent les figures 3c et 3d, dans le perçage d'entâme 2' précédemment formé, par rotation d'un mandrin conique enfoncé à force et par élévation de températures par frottement, une douille constituée uniquement par de la matière de la pièce 2 repoussée. L'outil équipant l'unité de fluoperçage 5 est avantageusement pourvu, à la base de sa partie tronconique, d'un collet 17 de limitation du matériau regorgeant à la face extérieure de la pièce à usiner 2. Ce collet rabat ledit matériau regorgeant et réalise ainsi une face extérieure d'appui plane.

Par mise en oeuvre de l'unité de fluoperçage 15 après réalisation d'un perçage d'entâme 2' pour le centrage de l'outil de fluoperçage, on obtient, dans la paroi de la pièce 2 à usiner, une partie de paroi de plus forte épaisseur à face extérieure plane, munie d'un perçage traversant permettant le passage d'une sonde ou d'un autre moyen de contrôle.

L'unité de fluotaraudage 6 permet alors, par mise en oeuvre d'un outil de fluotaraudage correspondant, c'est-à-dire par mise en oeuvre d'un outil pourvu à sa périphérie de pas de vis et enfoncé à force et en rotation dans le perçage réalisé par fluoperçage, une partie taraudée dans ledit perçage. Cette partie taraudée permet ensuite un montage par vissage d'une sonde ou d'un autre moyen de contrôle.

De manière connue, les outils équipant les unités 4 à 6, sont du type à changement rapide, automatique ou manuel et ne sont pas décrits plus en détails.

De préférence, le dispositif conforme à l'invention comporte une armoire de commande numérique, non représentée, assurant la gestion de l'ensemble des opérations d'usinage correspondant à un cycle de traitement d'une pièce 2 à usiner. Une telle armoire de commande numérique prend en compte les durées d'usinage relatives à chaque opération et délivre les impulsions de commande de rotation du tambour 1 pour le déplacement des pièces à usiner 2, après chaque opération, vers la position d'usinage suivante, ainsi que les déplacements de l'ensemble mobile 3 dans le cas où plusieurs opérations sont à réaliser sur une même pièce à usiner 2.

Le chargement et le déchargement des pièces à usiner 2 peuvent être effectués de manière manuelle par un opérateur intervenant en amont et en aval d'un cycle d'usinage et réalisant ces opérations en temps caché, en intervenant sur les moyens 8 de positionnement et de blocage des pièces 2 par l'intermédiaire d'une commande manuelle, non représentée. Une telle commande manuelle peut avantageusement être une commande sécurisée à deux mains, c'est-à-dire ne pouvant être actionnée que si l'opérateur a dégagé ses mains de la machine, après avoir disposé la pièce à usiner 2 dans les moyens 8. Pour le déchargement d'une pièce 2, une commande différente pourra être prévue, permettant un actionnement d'une main, afin de libérer l'autre main pour la prise de la pièce libérée.

Comme le montre plus particulièrement la figure 2, le déchargement des pièces usinées s'effectue préférentiellement lorsque celles-ci sont encore dirigées suivant un angle s'étendant sous l'horizontale, alors que le chargement s'effectue suivant un plan incliné au-dessus de l'horizontale.

Bien entendu, la commande manuelle des moyens 8 doit, pour des raisons de sécurité, être reliée à l'armoire de commande numérique, celle-ci ne délivrant une autorisation de déchargement et de chargement de pièces que pendant les opérations d'usinage et en aucun cas lors de la délivrance d'une impulsion de commande de rotation du tambour 1. Dans le cas où une impulsion du tambour 1 pourrait être déclenchée alors qu'une opération manuelle est encore en cours, l'automate suspendra le cycle d'usinage jusqu'à achèvement de l'opération manuelle.

Conformément à une caractéristique de l'invention et comme le montre plus particulièrement la figure 1 des dessins annexés, le dispositif peut être complété par des grilles de protection escamotables 18 s'étendant longitudinalement, respectivement en avant du ou des ensembles mobiles 3 et de part et d'autre du tambour 1, et ne laissant un accès qu'à deux faces du tambour 1 pour permettre le montage et le démontage des pièces 2. Ainsi, une intervention d'un opérateur à l'intérieur du dispositif dans le champ d'action des unités 4 à 6 est totalement exclue et les risques correspondants sont écartés.

Par ailleurs, le dispositif peut être équipé de moyens de protection complémentaires, sous forme de barrières immatérielles consistant en des champs d'ondes ou en des barrières à rayonnement lumineux. De telles barrières immatérielles sont notamment destinées à éviter qu'un opérateur s'approche du dispositif à une distance inférieure à la distance de sécurité et à déclencher immédiatement une alarme et/ou l'arrêt du dispositif.

Il peut également être prévu, selon une variante de réalisation de l'invention, non représentée aux dessins annexés, d'équiper le dispositif d'un moyen automatique de chargement et de déchargement de pièces 2, ce moyen étant relié respectivement à un magasin ou à un dispositif d'amenée en continu de pièces à usiner et à un magasin ou à un dispositif de transport et d'évacuation de pièces usinées et étant géré directement par l'intermédiaire de l'armoire de commande numérique du dispositif. Dans un tel cas, le dispositif conforme à l'invention peut fonctionner de manière automatique.

L'invention a également pour objet un procédé de réalisation de raccordements traversants sur des dispositifs d'échappements, notamment des tuyaux raccordés à des boîtes catalytiques, des boîtes catalytiques acoustiques ou des silencieux, mis en oeuvre au moyen de ce dispositif et qui consiste essentiellement à monter les pièces à usiner 2 successivement sur un tambour de montage 1, à réaliser sur lesdites pièces des opérations successives de centrage, de fluoperçage et de fluotaraudage, puis à démonter et à évacuer les pièces usinées.

Grâce à l'invention, il est possible de réaliser en une suite d'opérations continue, de manière semi-automatique ou automatique des raccordements traversants pour des dispositifs d'échappements, notamment des tuyaux raccordés à des boîtes catalytiques, des boîtes catalytiques acoustiques ou des silencieux de lignes d'échappement catalytique.

Ainsi, il est possible de préparer toutes les pièces d'échappement devant être équipées d'une sonde ou d'un autre moyen de contrôle à une réception rapide de ces moyens par des opérations d'usinage ne nécessitant aucun apport de matière, de sorte que des gains importants de productivité, et donc en ce qui concerne le prix de revient, peuvent être réalisés.

En outre, les pièces ainsi usinées restent particulièrement stables, tant en ce qui concerne leur forme que leur géométrie initiale. Par ailleurs, du fait d'un usinage sans apport de matière, ni enlèvement de copeaux, et donc sans bavure, le risque d'une destruction ultérieure de monolithe est évité.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention defini par les revendications suivantes.

## Revendications

1. Dispositif de réalisation de raccordements traversants sur des dispositifs d'échappements, notamment des tuyaux raccordés à des boîtes catalytiques, des boîtes catalytiques acoustiques ou des silencieux, **caractérisé en ce qu'**il est essentiellement constitué par un tambour (1) de montage de pièces (2) à usiner, par au moins un ensemble mobile (3) d'unités de centrage (4), de fluoperçage (5) et de fluotaraudage (6) desdites pièces (2) à usiner ledit ensemble mobile étant déplaçable parallèlement à l'axe longitudinal du tambour et par un bâti (7) de support et de guidage du tambour de montage (1) et d'au moins un ensemble mobile (3).

2. Dispositif, suivant la revendication 1, **caractérisé en ce que** le tambour (1) de montage des pièces (2) à usiner est réalisé sous forme d'un élément mécano-soudé de section polygonale, pourvu sur chaque face de moyens (8) de positionnement et de blocage des pièces (2) à usiner et entraîné en rotation par l'intermédiaire d'un ensemble motoréducteur indexable (9) et d'une transmission à roues et chaîne (10).

3. Dispositif, suivant l'une quelconque des revendications 1 et 2, **caractérisé en ce que** le tambour (1) de montage des pièces (2) à usiner est monté par ses extrémités sur des paliers (11) prévus sur le bâti (7) de support et de guidage du tambour de montage (1) et d'au moins un ensemble mobile (3) et est pourvu, en regard de chaque surface plane le délimitant, sur un flasque (1') d'extrémité, d'un perçage (1") destiné à coopérer avec un doigt d'indexation (12) prévu sur le bâti (7).

4. Dispositif, suivant la revendication 3, **caractérisé en ce que** le doigt d'indexation (12) consiste en la tige d'un piston pneumatique ou hydraulique commandé automatiquement au déverrouillage par chaque impulsion de commande de rotation du tambour (1), le verrouillage s'effectuant également automatiquement à l'arrêt de la rotation du tambour (1).

5. Dispositif, suivant l'une quelconque des revendications 3 et 4, **caractérisé en ce que** l'extrémité de ce doigt d'indexation (12) est conique ou tronconique.

6. Dispositif, suivant la revendication 2, **caractérisé en ce qu'**à l'extrémité du tambour opposée à celle comportant la transmission à roues et chaîne (10) coopérant avec l'ensemble moto-réducteur (9), le palier (11) du tambour (1) coopérant avec le bâti (7) de support et de guidage du tambour de montage (1) et d'au moins un ensemble mobile (3) est sous forme d'un joint tournant comportant les raccordements des circuits de commande des moyens (8) de positionnement et de blocage des pièces (2) à usiner.

7. Dispositif, suivant la revendication 2, **caractérisé en ce que** les moyens (8) de positionnement et de blocage des pièces (2) à usiner sont sous forme de brides et de gabarits à commande pneumatique ou hydraulique.

8. Dispositif, suivant la revendication 1, **caractérisé en ce que** chaque ensemble mobile (3) d'unités de centrage (4), de fluoperçage (5) et de fluotaraudage (6) des pièces (2) à usiner se présente sous la forme d'un chariot guidé parallèlement à l'axe longitudinal du tambour (1) sur des rails (7') du bâti (7) de support et de guidage et entraîné en déplacement longitudinal le long du tambour (1) par l'intermédiaire d'un entraînement linéaire (13) constitué sous forme d'un ensemble motoréducteur et d'une transmission de mouvement mécanique ou encore sous forme d'un vérin hydraulique ou pneumatique.

9. Dispositif, suivant la revendication 8, **caractérisé en ce que** les unités de centrage (4), de fluoperçage (5) et de fluotaraudage (6) des pièces (2) à usiner sont montées sur le chariot formant l'ensemble mobile (3) avec des décalages angulaires correspondant au décalage angulaire entre les plans radiaux passant au milieu des faces du polygone formant le tambour (1) et par l'axe longitudinal de ce dernier.

10. Dispositif, suivant la revendication 9, **caractérisé en ce que** le tambour (1) présente une section hexagonale et les unités de centrage (4), de fluoperçage (5) et de fluotaraudage (6) des pièces (2) à usiner sont disposées respectivement dans le plan radial vertical passant par l'axe longitudinal du tambour (1) et au-dessus dudit tambour (1), à 60° par rapport à ce plan vertical et à 120° par rapport à ce plan vertical, tous ces plans contenant lesdites unités (4 à 6) étant radiaux et sécants sur l'axe longitudinal du tambour (1).

11. Dispositif, suivant l'une quelconque des revendications 1 et 9, **caractérisé en ce que** les unités de centrage (4), de fluoperçage (5) et de fluotaraudage (6) des pièces (2) à usiner sont constituées chacune sous forme d'un groupe motorisé comportant chacun un moteur d'entraînement (4', 5', 6') d'un dispositif porte-outils (4", 5", 6") et monté sur un chariot de déplacement (4"', 5''', 6''') suivant l'axe longitudinal de l'outil, dans un plan passant perpendiculairement par une face correspondante du tambour (1) et par l'axe longitudinal dudit tambour (1).

12. Dispositif, suivant la revendication 11, **caractérisé en ce que** les chariots de déplacement (4"', 5''', 6''') sont guidés chacun dans une unité correspondante (14, 15 ou 16) comportant un moyen de déplacement longitudinal (14', 15', 16'), dans un plan correspondant à celui passant par la pièce (2) à usiner correspondante et l'axe longitudinal du tambour (1), ce moyen de déplacement longitudinal (14', 15', 16') étant constitué soit par un vérin, soit par un ensemble motoréducteur.

13. Dispositif, suivant l'une quelconque des revendications 11 et 12, **caractérisé en ce que** les chariots de déplacements (4"', 5''', 6''') coopèrent avec des moyens d'indexation longitudinaux consistant en des butées de fin de course ou des détecteurs ou analogues, destinés à commander la fin du déplacement desdits chariots (4"', 5"', 6''') et des dispositifs porte-outils (4", 5", 6").

14. Dispositif, suivant l'une quelconque des revendications 1 à 13, **caractérisé en ce qu** 'il comporte une armoire de commande numérique assurant la gestion de l'ensemble des opérations d'usinage correspondant à un cycle de traitement d'une pièce (2) à usiner.

15. Dispositif, suivant la revendication 14, **caractérisé en ce qu'**il est équipé, en outre, d'une commande manuelle reliée à l'armoire de commande numérique.

16. Dispositif, suivant la revendication 1, **caractérisé en ce qu'**il est complété par des grilles de protection escamotables (18) s'étendant longitudinalement respectivement en avant du ou des ensembles mobiles (3) et de part et d'autre du tambour (1) et ne laissant un accès qu'à deux faces du tambour (1) pour permettre le montage et le démontage des pièces (2).

17. Dispositif, suivant la revendication 1, **caractérisé en ce qu'**il est équipé de moyens de protection complémentaires, sous forme de barrières-immatérielles consistant en des champs d'ondes ou en des barrières à rayonnement lumineux.

18. Dispositif, suivant l'une quelconque des revendications 1 à 17, **caractérisé en ce qu'**il est équipé d'un moyen automatique de chargement et de déchargement de pièces (2), ce moyen étant relié respectivement à un magasin ou à un dispositif d'amenée en continu de pièces à usiner et à un magasin ou à un dispositif de transport et d'évacuation de pièces usinées et étant géré directement par l'intermédiaire de l'armoire de commande numérique du dispositif.

19. Procédé mis en oeuvre au moyen du dispositif suivant l'une quelconque des revendications 1 à 18, **caractérisé en ce qu'**il consiste essentiellement à monter les pièces à usiner (2) successivement sur un tambour de montage (1), à réaliser sur lesdites pièces des opérations successives de centrage, de fluoperçage et de fluotaraudage, puis à démonter et à évacuer les pièces usinées.

## Patentansprüche

1. Vorrichtung zur Herstellung von Anschlussstutzen in Abgasanlagen, insbesondere von mit Katalysatoren, akustischen Katalysatoren bzw. Schalldämpfern verbundenen Rohren, **dadurch gekennzeichnet, dass** sie im wesentlichen aus einer Montagetrommel (1) für die zu bearbeitenden Werkstücke (2), aus mindestens einer beweglichen Gruppe (3) von Einheiten für das Zentrieren (4), Fliessbohren (5) bzw. Fliessgewindebohren (6) der genannten Werkstücke (2), wobei die genannte bewegliche Gruppe (3) parallel zur Längsachse der Trommel verschiebbar ist, und aus einem Trag- bzw. Führungsgestell (7) für die Montagetrommel (1) und mindestens einer beweglichen Gruppe (3) besteht.

2. Vorrichtung nach Anspruch 1, **dadurch gekennzeichnet, dass** die Montagetrommel (1) für die zu bearbeitenden Werkstücke (2) in Form eines mechanisch geschweißten Elements mit polygonalem Querschnitt ausgeführt ist, welches auf jeder Seite mit Mitteln (8) für das Positionieren und Blockieren der zu bearbeitenden Werkstücke (2) versehen ist und über einen indexierbaren Getriebemotor (9) und mittels einer Rad- und Kettenübertragung (10) in Rotation versetzt wird.

3. Vorrichtung nach einem der Ansprüche 1 und 2, **dadurch gekennzeichnet, dass** die Montagetrommel (1) für die zu bearbeitenden Werkstücke (2) mit ihren Enden an Lagern (11) montiert ist, welche auf dem Trag- und Führungsgestell (7) der Montagetrommel (1) und mindestens einer beweglichen Gruppe (3) vorgesehen sind, und gegenüber jeder diese begrenzenden planen Fläche an einem Endflansch (1') eine Bohrung (1") aufweist, welche dazu bestimmt ist, mit einem auf dem Gestell (7) vorgesehenen Indexierungsfinger (12) zusammenzuwirken.

4. Vorrichtung nach Anspruch 3, **dadurch gekennzeichnet, dass** der Indexierungsfinger (12) aus der Kolbenstange eines Pneumatik- oder Hydraulikkolbens besteht, der automatisch mit dem Entriegeln der Trommel (1) durch den jeweiligen Rotationssteuerimpuls gesteuert wird, wobei die Verriegelung nach Beendigung der Rotation der Trommel (1) ebenfalls automatisch erfolgt.

5. Vorrichtung nach einem der Ansprüche 3 und 4, **dadurch gekennzeichnet, dass** das Ende des Indexierungsfingers (12) kegelförmig oder kegelstumpfförmig ist.

6. Vorrichtung nach Anspruch 2, **dadurch gekennzeichnet, dass** das Ende der Trommel, welches demjenigen gegenüberliegt, das den mit dem Getriebemotor (9) zusammenwirkenden Rad- und Kettenantrieb (10) aufweist, wobei das Lager (11) der Trommel (1) mit dem Trag- und Führungsgestell (7) der Montagetrommel (19) und mindestens einer beweglichen Gruppe (3) zusammenwirkt, die Form eines Drehlagers aufweist, welches die Anschlüsse der Steuerkreise der Mittel (8) für das Positionieren und das Blockieren der zu bearbeitenden Werkstücke (2) aufweist.

7. Vorrichtung nach Anspruch 2, **dadurch gekennzeichnet, dass** die Positionierund Blockiermittel (8) der zu bearbeitenden Werkstücke (2) die Form von Bändern und Schablonen mit pneumatischer oder hydraulischer Steuerung aufweisen.

8. Vorrichtung nach Anspruch 1, **dadurch gekennzeichnet, dass** jede bewegliche Gruppe (3) der Einheiten zum Zentrieren (4), Fliessbohren (5) und Fliessgewindebohren (6) der zu bearbeitenden Werkstücke (2) jeweils die Form eines Schlittens hat, welcher parallel zur Längsachse der Trommel (1) auf Schienen (7') des Trag- und Führungsgestells (7) und in der Längsbewegung längs der Trommel (1) mittels eines Linearantriebs (13) bewegt wird, welcher in Form eines Getriebemotors und einer mechanischen Bewegungsübertragung oder einer Bewegungsübertragung in Form eines hydraulischen oder pneumatischen Zylinders ausgeführt wird.

9. Vorrichtung nach Anspruch 8, **dadurch gekennzeichnet, dass** die Einheiten zum Zentrieren (4), Fliessbohren (5) und Fliessgewindebohren (6) der zu bearbeitenden Werkstücke (2) auf dem Schlitten montiert sind, der die bewegliche Gruppe (3) bildet, wobei ein Winkelversatz vorgesehen ist, der dem Winkelversatz zwischen den radialen Ebenen entspricht, die sich durch die Mitte der die Trommel (1) bildenden Flächen des Polygons sowie durch die Längsachse der letztgenannten erstrecken.

10. Vorrichtung nach Anspruch 9, **dadurch gekennzeichnet, dass** die Trommel (1) einen sechseckigen Querschnitt aufweist, und dass die Einheiten zum Zentrieren (4), Fliessbohren (5) und Fliessgewindebohren (6) der zu bearbeitenden Werkstücke (2) jeweils in der vertikalen radialen Ebene angeordnet sind, welche sich durch die Längsachse der Trommel (1) und oberhalb der genannten Trommel (1) in einem Winkel von 60° bezogen auf die Vertikalebene und in einem Winkel von 120° bezogen auf die genannte Vertikalebene erstreckt, wobei sämtliche Ebenen, die die genannten Einheiten (4 bis 6) enthalten, radial verlaufen und die Längsachse der Trommel (1) schneiden.

11. Vorrichtung nach einem der Ansprüche 1 und 9, **dadurch gekennzeichnet, dass** die Einheiten zum Zentrieren (4), Fliessbohren (5) und Fliessgewindebohren (6) der zu bearbeitenden Werkstücke (2) jeweils als Antriebsgruppe ausgebildet sind, welche jeweils einen Antriebsmotor (4', 5', 6') einer Werkzeugträgervorrichtung (4", 5", 6") aufweisen und auf einem Schlitten (4''', 5''', 6"') für eine Bewegung in der Längsachse des Werkzeugs in einer sich senkrecht durch eine entsprechende Fläche der Trommel (1) und durch die Längsachse der genannten Trommel (1) erstreckenden Ebene montiert sind.

12. Vorrichtung nach Anspruch 11, **dadurch gekennzeichnet, dass** die Schlitten (4''', 5''', 6''') jeweils in einer entsprechenden Einheit (14, 15 oder 16) geführt werden, welche ein Mittel zur Bewegung in Längsrichtung (14', 15', 16') in einer Ebene aufweisen, welche derjenigen entspricht, die durch das entsprechende zu bearbeitende Werkstück (2) sowie durch die Längsachse der Trommel (1) verläuft, wobei das genannte Mittel zur Bewegung in Längsrichtung (14', 15', 16') entweder durch einen Zylinder oder eine Gruppe von Getriebemotoren gebildet wird.

13. Vorrichtung nach einem der Ansprüche 11 und 12, **dadurch gekennzeichnet, dass** die Schlitten (4''', 5''', 6''') mittels in Längsrichtung angeordneter Indexiermittel zusammenarbeiten, welche aus Anschlägen oder Detektoren oder dergleichen bestehen und dazu bestimmt sind, das Ende der Bewegung der genannten Schlitten (4''', 5''', 6''') und der Werkzeugträgervorrichtungen (4", 5", 6") zu steuern.

14. Vorrichtung nach einem der Ansprüche 1 bis 13, **dadurch gekennzeichnet, dass** sie einen digitalen Steuerschrank aufweist, welcher die Gesamtheit der Bearbeitungsvorgänge verwaltet, die einem Bearbeitungszyklus eines zu bearbeitenden Werkstückes (2) entsprechen.

15. Vorrichtung nach Anspruch 14, **dadurch gekennzeichnet, dass** sie außerdem eine mit dem digitalen Steuergerät verbundene Handsteuerung aufweist.

16. Vorrichtung nach Anspruch 1, **dadurch gekennzeichnet, dass** sie durch schwenkbare Schutzgitter (18) ergänzt wird, welche sich jeweils bezogen auf die bewegliche(n) Gruppe(n) (3) in Längsrichtung und beiderseits der Trommel (1) nach vorne oder nach hinten erstrecken und den Zugang zu den beiden Flächen der Trommel (1) lediglich freigeben, um das Montieren und Demontieren der Werkstücke (2) zu ermöglichen.

17. Vorrichtung nach Anspruch 1, **dadurch gekennzeichnet, dass** sie mit zusätzlichen Schutzeinrichtungen in Form von immateriellen Barrieren versehen ist, welche aus Feldern von elektromagnetischen Wellen oder aus Lichtschranken bestehen.

18. Vorrichtung nach einem der Ansprüche 1 bis 17, **dadurch gekennzeichnet, dass** sie mit einer automatischen Be- und Entladevorrichtung der Werkstücke (2) versehen ist, wobei die genannte Vorrichtung jeweils mit einem Magazin oder einer Vorrichtung zur kontinuierlichen Heranführung von Werkstücken und mit einem Magazin und einer Transportvorrichtung für die Abfuhr der bearbeiteten Werkstücke versehen ist, welche direkt über den digitalen Steuerschrank der Vorrichtung verwaltet wird.

19. Verfahren zum Betrieb der Vorrichtung nach wenigstens einem der Ansprüche 1 bis 18, **dadurch gekennzeichnet, dass** es im wesentlichen darin besteht, die zu bearbeitenden Werkstücke (2) sukzessive auf einer Montagetrommel (1) zu montieren, um an den genannten Werkstücken sukzessive Vorgänge des Zentrierens, Fliessbohrens bzw. Fliessgewindebohrens durchzuführen und anschließend die bearbeiteten Werkstücke zu demontieren und abzuführen.

## Claims

1. Device for making connections that cross over exhaust devices, in particular pipes connected to catalytic cases, audible catalytic cases or silencers, **characterised in that** it basically comprises a drum (1) for mounting parts (2) to be machined, at least one movable assembly (3) of centring (4), flow-drilling (5) and flow-tapping (6) units for said parts (2) to be machined, said movable assembly being displaceable parallel to the longitudinal axis of the drum, and a structure (7) for supporting and guiding the assembly drum (1) and at least one movable assembly (3).

2. Device according to claim 1, **characterised in that** the drum (1) for mounting parts (2) to be machined is produced in the form of a mechanically welded element of polygonal section, provided on each face with means (8) for positioning and locking the parts (2) to be machined, and driven in rotation via an indexable reduction motor assembly (9) and a wheel-and-chain transmission system (10).

3. Device according to any one of claims1 and 2, **characterised in that** the drum (1) for mounting the parts (2) to be machined is mounted by its ends on bearings (11) provided on the structure (7) for supporting and guiding the assembly drum (1) and at least one movable assembly (3), and is provided, opposite each flat surface delimiting it, on an end plate (1'), with a perforation (1") that is intended to cooperate with an indexing finger (12) provided on the structure (7).

4. Device according to claim 3, **characterised in that** the indexing finger (12) comprises the rod of a pneumatic or hydraulic piston, the unlocking of which is automatically controlled by each rotation control pulse of the drum (1), unlocking also taking place automatically when the drum (1) stops rotating.

5. Device according to any one of claims 3 and 4, **characterised in that** the end of this indexing finger (12) is conical or frusto-conical.

6. Device according to claim 2, **characterised in that** at the end of the drum that is remote from that comprising the wheel-and-chain transmission system (10) cooperating with the reduction motor assembly (9), the bearing (11) of the drum (1) cooperating with the structure (7) for supporting and guiding the assembly drum (1) and at least one movable assembly (3) is in the form of a rotating joint comprising the connections of the control circuits of the means (8) for positioning and locking the parts (2) to be machined.

7. Device according to claim 2, **characterised in that** the means (8) for positioning and locking the parts (2) to be machined are in the form of pneumatically or hydraulically controlled flanges and gauges.

8. Device according to claim 1, **characterised in that** each movable assembly (3) of centring (4), flow-drilling (5) and flow-tapping (6) units for the parts (2) to be machined is in the form of a carriage that is guided parallel to the longitudinal axis of the drum (1) on rails (7') of the supporting and guiding structure (7), and is driven in longitudinal displacement along the drum (1) via a linear drive element (13) comprising a reduction motor assembly and a mechanical movement transmission system, or else in the form of a hydraulic or pneumatic cylinder.

9. Device according to claim 8, **characterised in that** the centring (4), flow-drilling (5), and flow-tapping (6) units for the parts (2) to be machined are mounted on the carriage forming the movable assembly (3) with angular intervals corresponding to the angular interval between the radial planes passing through the middle of the faces of the polygon forming the drum (1), and through the longitudinal axis of said drum.

10. Device according to claim 9, **characterised in that** the drum (1) displays a hexagonal section and the centring (4), flow-drilling (5) and flow-tapping (6) units for the parts (2) to be machined are respectively arranged in the radial vertical plane passing through the longitudinal axis of the drum (1) and above said drum (1), at 60° to this vertical plane and at 120° to this vertical plane, all of these planes containing said units (4 to 6) being radial and secant to the longitudinal axis of the drum (1).

11. Device according to any one of claims 1 and 9, **characterised in that** the centring (4), flow-drilling (5) and flow-tapping (6) units for the parts (2) to be machined each comprise a motorised block, each comprising a motor (4', 5', 6') for driving a tool-holding device (4", 5", 6") and being mounted on a carriage (4"', 5''', 6''') for displacement along the longitudinal axis of the tool, in a plane passing perpendicularly through a corresponding face of the drum (1), and through the longitudinal axis of said drum (1).

12. Device according to claim 11, **characterised in that** the displacement carriages (4"', 5"', 6"') are each guided in a corresponding unit (14, 15 or 16) comprising a longitudinal displacement means (14', 15', 16'), in a plane corresponding to that passing through the corresponding part (2) to be machined and the longitudinal axis of the drum (1), this longitudinal displacement means (14', 15', 16') comprising either a cylinder or a reduction motor assembly.

13. Device according to any one of claims 11 and 12, **characterised in that** the displacement carriages (4''', 5''', 6''') cooperate with longitudinal indexing means comprising limit stops or detectors or the like, which are intended to control the displacement limit of said carriages (4''', 5''', 6''') and of the tool-holding devices (4", 5", 6").

14. Device according to any one of claims 1 to 13, **characterised in that** it comprises a numerical control console managing all of the machining processes corresponding to a processing cycle of a part (2) to be machined.

15. Device according to claim 14, **characterised in that** it is also provided with a manual control unit that is connected to the numerical control console.

16. Device according to claim 1, **characterised in that** it is complemented by retractable protective screens (18) extending longitudinally in front of the movable assembly or assemblies (3) and either side of the drum (1), respectively, and only leaving two faces of the drum (1) accessible for the assembly and the dismantling of the parts (2).

17. Device according to claim 1, **characterised in that** it is provided with complementary protective means, in the form of immaterial barriers made up of wavefields or light radiation barriers.

18. Device according to any one of claims 1 to 17, **characterised in that** it is provided with an automatic means for loading and unloading parts (2), this means being connected to a magazine or a device for continuously supplying parts to be machined and to a magazine or a device for conveying and discharging machined parts, respectively, and being managed directly via the numerical control console of the device.

19. Method implemented using the device according to any one of claims 1 to 18, **characterised in that** it basically consists in successively mounting the parts (2) to be machined on an assembly drum (1), in carrying out successive centring, flow-drilling and flow-tapping processes on said parts, then in dismantling and in discharging the machined parts.
